# EUROPÄISCHE PATENTSCHRIFT

(11) **EP 1 008 493 B1**
(45) Veröffentlichungstag und Bekanntmachung des Hinweises auf die Patenterteilung: **04.10.2006**
(21) Anmeldenummer: 99124186.0
(22) Anmeldetag: 03.12.1999
(51) Int. Cl.: B60R 21/13, B62D 33/06

(54) **Schutzeinrichtung und Bedienerstand**
Safety arrangement and operator stand
Dispositif de protection et poste de commande

(30) Priorität: 09.12.1998 US 207989
(43) Veröffentlichungstag der Anmeldung: 14.06.2000
(73) Patentinhaber: DEERE & COMPANY, Moline, Illinois 61265-8098 (US)
(72) Erfinder: O'Neill, Michael Jerome, Mayville, WI 53050 (US); Bocksnick, John Louis, Willow Springs, NC 27592 (US); Reimer, Michael Perry, Morden, Manitoba R6M 1B4 (CA); Friesen, Leon Roy, Morden, Manitoba R6M 1R1 (CA); Goertzen, Irvin, Morden, Manitoba R6M 2A1 (CA)
(74) Vertreter: Magin, Ludwig Bernhard

(56) Entgegenhaltungen:
- WO-A-98/35869
- FR-A- 2 085 258
- US-A1- 4 688 846

## Beschreibung

Die Erfindung betrifft eine Schutzeinrichtung mit zumindest zwei zumindest annähernd vertikal ausgerichteten ersten Stützstreben, die einen selbständigen Überschlagschutz bilden.

An Nutzfahrzeugen wie beispielsweise an Geräten zur Rasen-, Garten- und Grundstückspflege, Baumaschinen und landwirtschaftlichen Fahrzeugen wird eine Vielzahl verschiedener Schutzeinrichtungen in Form von Kabinen, Überrollbügeln- oder -käfigen etc. eingesetzt.

Die US-A-3,443,833 zeigt eine Schutzeinrichtung für eine Fahrerplattform eines Ackerschleppers, wobei die Schutzeinrichtung einen umgekehrt U-förmigen Überrollbügel, der den Fahrersitz umschließt, ein auskragendes Schutzdach, das an dem Überrollbügel befestigt ist und die Fahrerplattform überdeckt, und Kabinenkomponenten aufweist, die lösbar an dem Schutzdach der Schutzeinrichtung anbringbar sind. Der Überrollbügel-Schutzdach-Zusammenbau stellt das Grundgerüst der Schutzeinrichtung dar und ist auch im abgebauten Zustand verhältnismäßig sperrig.

Die US-A-4,688,846 zeigt eine Kabine, deren Seitenflächen und Türen aus Stoffbahnen bestehen, die miteinander verbunden werden können und auf einem Rahmen angeordnet sind.

Die WO 98/35869 A zeigt ein modulares Gerüst für Lastkraftwagen-Kabinen, welches derart ausgebildet ist, dass es sich an Lastkraftwagen unterschiedlicher Größe anpassen läßt.

Dokument FR 2085258 offenbart eine Schutzeinrichtung mit zumindest zwei zumindest annähernd vertikal ausgerichteten, voneinander seitlich beabstandeten ersten Stützstreben, die einen Überschlagschutz bilden, wobei an jeder ersten Stützstrebe ein Scharnier oder Gelenk vorgesehen ist, wobei die ersten Stützstreben mit weiteren im wesentlichen vertikal ausgerichteten Stützstreben und/oder im wesentlichen horizontal ausgerichteten Zwischenstreben zur Bildung eines Rahmens in Abhängigkeit von spezifischen Einsatzbedingungen verbindbar sind.

Das der Erfindung zugrunde liegende Problem wird darin gesehen, daß Versand und Montage bekannter Schutzeinrichtungen relativ aufwendig sind und daß die Schutzeinrichtungen nicht optimal an die Anforderungen des Benutzers angepaßt werden können.

Dieses Problem wird erfindungsgemäß durch die Lehre der Patentansprüche 1 bzw. 7 gelöst, wobei in den weiteren Patentansprüchen die Lösung in vorteilhafter Weise weiterentwickelnde Merkmale aufgeführt sind.

Auf diese Weise wird in Abhängigkeit von der Anzahl der Stützstreben eine variable Schutzeinrichtung in der Art eines Überrollschutzes oder auch Käfigs zur Verfügung gestellt, die einfach zu montieren bzw. zu demontieren ist, da nur einzelne Bauteile bzw. Stützstreben an dem Fahrzeug bzw. Arbeitsgerät angebracht und abgenommen werden müssen. Diese Bauteile können in demontiertem Zustand auf kleinem Raum beispielsweise zum Versand oder zur Lagerung gepackt werden. Darüber hinaus kann der Fahrzeugnutzer in einfacher Weise auswählen, welche Art von Schutzeinrichtung in Abhängigkeit von spezifischen Einsatzbedingungen, zu wählen ist. Auch ein Nachrüsten oder Austausch ist einfach möglich, da nur einzelne Elemente abgenommen oder hinzugefügt werden müssen, ohne daß hierzu schwere und/oder sperrige Baugruppen bewegt werden müßten. Die jeweils angebauten Stützstreben bestimmen die Umfangsflächen der Schutzeinrichtung, die den geschützten Raum beispielsweise für eine Bedienungsperson bestimmen.

Sind die Stützstreben voneinander seitlich beabstandet, so bestimmen sie zwischen sich einen Raum, in dem beispielsweise ein Bedienersitz, Bedienerpult etc. vorgesehen sein kann, der durch die Stützstreben bzw. den Rahmen vor Umwelteinflüssen bzw. -gefahren, wie beispielsweise vor umherwirbelndem Material, tiefhängenden Ästen, oder auch vor Witterungseinflüssen geschützt werden kann. Sie können aber auch einen geschützten Raum in der Art eines Überrollschutzes zur Verfügung stellen.

Die Stützstreben und Zwischenstreben können als vollständig unabhängige Bauteile konzipiert sein. Einfach in der Montage und günstig für die Stabilität ist es allerdings, wenn einige oder auch alle Stützstreben mit einer zughörigen Zwischenstrebe als ein Bauteil ausgeführt sind. Diese Streben können verschraubt oder anderweitig lösbar verbunden sein, vorzugsweise sind sie aber in der Art eines Bügels ausgebildet der beispielsweise L-förmig oder aber vorzugsweise C-förmig ausgebildet sein kann.

Die Umfangsflächen der Schutzeinrichtung können offen ausgebildet sein. Es kann aber vorgesehen sein, daß an den Umfangsflächen bzw. an den sie jeweils bestimmenden Stützstreben bzw. den zugeordneten Zwischenstreben Bauelemente vorzugsweise lösbar angebracht werden, die in Abhängigkeit von den an das Arbeitsgerät durch die Einsatzbedingungen oder die Präferenzen der Bedienungsperson etc. gestellt werden, angebracht oder abgenommen werden können. So können beispielsweise Tür-, Fenster- oder andere Abdeckelemente auch in Form eines Dachelements vorgesehen sein, so daß die Schutzeinrichtung eine vollständig oder teilweise geschlossene Struktur in der Art einer Kabine o.ä. aufweisen kann. Es können auch weitere Bauelemente wie Beleuchtungselemente, Scheibenwischer etc. in dieser Art vorgesehen sein. Der An- und Abbau dieser Bauelemente kann durch einen Händler oder auch durch eine Bedienungsperson vorgenommen werden, so daß ein werkstattseitiges Vorrüsten, aber auch ein Nachrüsten von Bauteilen, ein Ersetzen oder auch ein flexibles An- und Abbauen vor oder während eines spezifischen Arbeitseinsatzes des Arbeitsgeräts möglich ist.

Die in der Art von Abdeckelementen ausgeführten Bauelemente können zumindest bereichsweise starr oder flexibel ausgeführt sein. Flexible Abdeckelemente können beispielsweise in der Art mit Textil- und/oder Synthetikmaterial bespannter Rahmen ausgeführt sein, in denen Fenster vorzugsweise aus Kunststoffmaterial vorgesehen sein können. Eine solche Verkleidung ist relativ kostengünstig und leicht. Eine robustere, aber auch teurere und schwerer Alternative bietet eine starre Ausführung beispielsweise aus Kunststoff, Glas oder Metall oder auch aus einer Kombination der genannten Werkstoffe. Auch eine Kombination flexibler und starrer Bereiche oder Bauelemente ist möglich.

Die Stützstreben können starr ausgebildet sein. Weist aber zumindest eine der Stützstreben ein Gelenk auf, so kann diese abgewinkelt bzw. verschwenkt werden, um so die Bauhöhe der Schuteinrichtung vollständig oder bereichsweise zu verändern, beispielsweise um niedrige Tore durchfahren zu können oder um ein Arbeiten unter tiefhängenden Ästen etc. zu ermöglichen.

Erfindungsgemäße Schutzeinrichtungen können an Bedienerständen beispielsweise an feststehenden oder beweglichen bzw. fahrbaren Arbeitsgeräten, wie Geräte zur Rasen-, Garten- bzw. Grundstückspflege, wie Mähgeräte, Schneefräsen, Kehrmaschinen, an Baugeräten und -fahrzeugen, wie Bagger, Kräne und Kompaktlader etc., an landwirtschaftlichen Fahrzeugen, wie an Ackerschleppern, Kleinschleppern, (Teleskop-) Ladern und Erntemaschinen, wie Mähdrescher oder Feldhäcksler, und auch an Bedienerständen von Fördergeräten eingesetzt werden

In der Zeichnung sind nachfolgend näher beschriebene Ausführungsbeispiele der Erfindung dargestellt. Es zeigt:
- Fig. 1: ein Arbeitsgerät mit einer Schutzeinrichtung in Explosionsdarstellung,
- Fig. 2: ein zweites Arbeitsgerät mit einer weiteren erfindungsgemäßen Schutzeinrichtung,
- Fig. 3: die erste Schutzeinrichtung in detaillierter Explosionsdarstellung,
- Fig. 4: einen Rahmen der Schutzeinrichtung,
- Fig. 5: eine Ansicht des Rahmens mit einem angebauten Dachelement und einer montierten Windschutzscheibe, Türen und seitlichen und rückwärtigen Fenstern in Explosionsdarstellung,
- Fig. 6: eine Ansicht entsprechend Fig. 5 mit flexiblen Türen und Fenstern bzw. flexibler Windschutzscheibe,
- Fig. 7: eine vergrößerte Ansicht einer Halterung, über die die vorderen Stützstreben mit dem Fahrzeug verbunden sind,
- Fig. 8: eine vergrößerte Ansicht einer Bodenplattenverbreiterung,
- Fig. 9: eine vergrößerte Ansicht eines C-förmigen Halters, welcher Verbindungsstreben mit rückwärtigen Stützstreben und einer ersten Querstrebe verbindet,
- Fig. 10: eine Schnittdarstellung entlang der Linie 10-10 aus Figur 6, die die Befestigung der Windschutzscheibe verdeutlicht,
- Fig. 11: eine vergrößerte Ansicht der Halterung, die die zentrale Stützstrebe mit der rückwärtigen Stützstrebe verbindet,
- Fig. 12: eine vergrößerte Darstellung eines der Haltezapfen, die dazu dienen, die Türen und seitlichen Fenster zu halten,
- Fig. 13: eine vergrößerte Schnittdarstellung entlang der Linie 13-13 aus Fig. 6, die die Velcro Klettbänder verdeutlicht, die dazu benutzt werden, die obere Klappe eines flexiblen rückwärtigen Fensters mit der Querstrebe zu verbinden,
- Fig. 14: einen vergrößerten Schnitt entlang der Linie 14-14 aus Fig. 6, die die Klettbänder verdeutlicht, über die die obere Klappe eines flexiblen, seitlichen Fensters mit einer Verbindungsstrebe verbunden wird,
- Fig. 15: einen vergrößerten Schnitt entlang der Linie 15-15 aus Fig. 6, der die Klettbänder zeigt, über die die vertikale Klappe der flexiblen rückwärtigen und seitlichen Fenster mit den rückwärtigen und zentralen Stützstreben verbunden werden und
- Fig. 16: eine Ansicht einer alternativen, einteiligen Ausführungsform der flexiblen rückwärtigen und seitlichen Fenster.

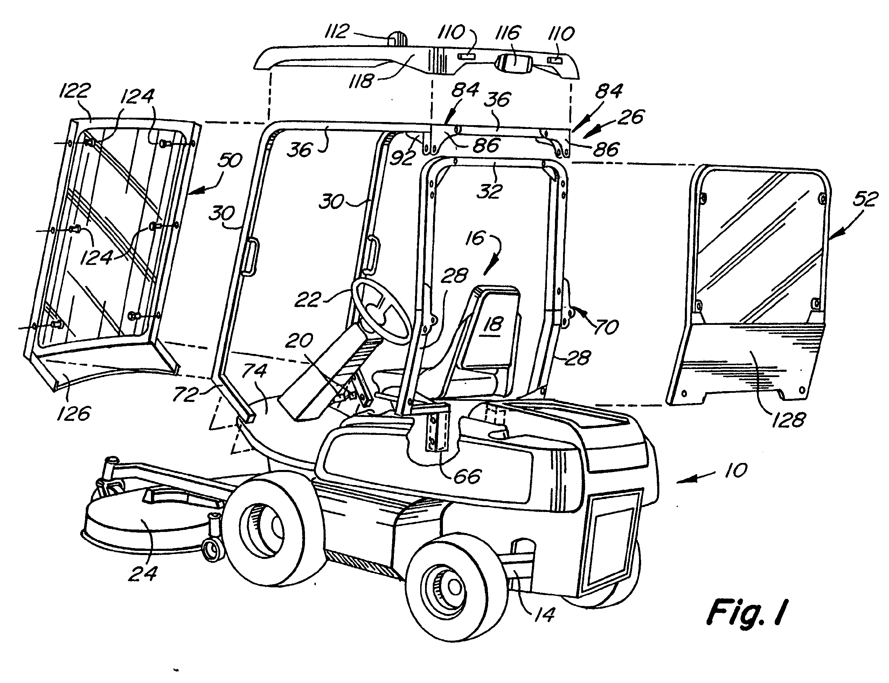

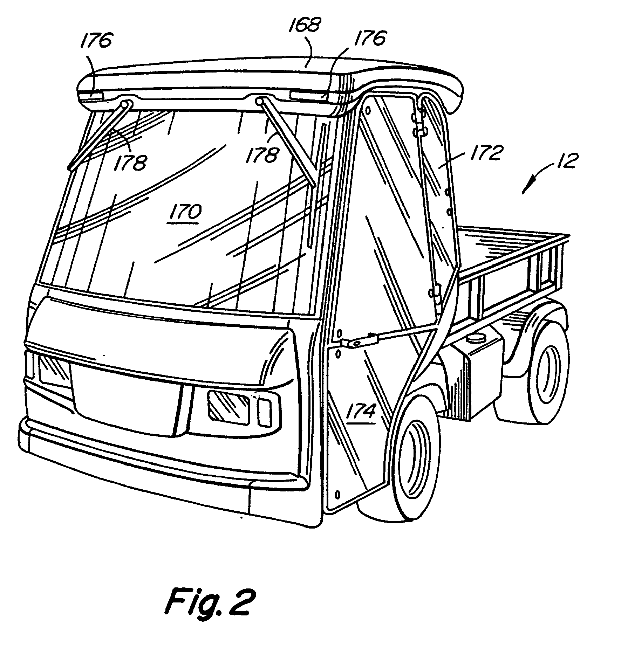

Zuerst wird auf Figur 1 Bezug genommen, in der eine linke, rückwärtige perspektivische Ansicht eines Frontmähgeräts bzw. Arbeitsgeräts 10 von oben gezeigt wird, an dem eine modulare Kabine bzw. eine Schutzeinrichtung eingesetzt werden kann. Es soll deutlich gemacht werden, daß die modulare Kabine oder Schutzeinrichtung ebenfalls an anderen Fahrzeugen oder Arbeitsgeräten mit Rädern eingesetzt werden kann, wie an einem Nutzfahrzeug 12, wie es in Figur 2 dargestellt ist. Die Arbeitsgeräte 10, 12 würden eine Energiequelle wie einen Diesel- oder Benzinmotor, einen Rahmen 14, eine Bedienerplattform 16, einen Bedienersitz 18 und Fuß- und Handsteuerungen 20 und 22 aufweisen. Das Fahrzeug 10 aus Figur 1 ist auch mit der Fähigkeit ausgestattet, an seinem vorderen Ende ein Anbaugerät wie ein Mehrspindelmähwerk 24 aufzunehmen.

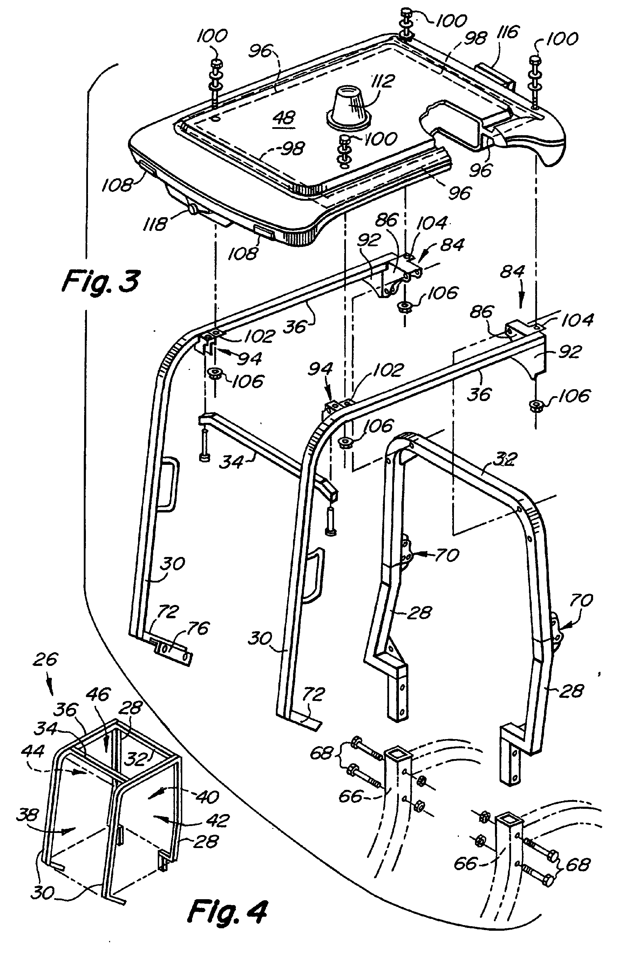

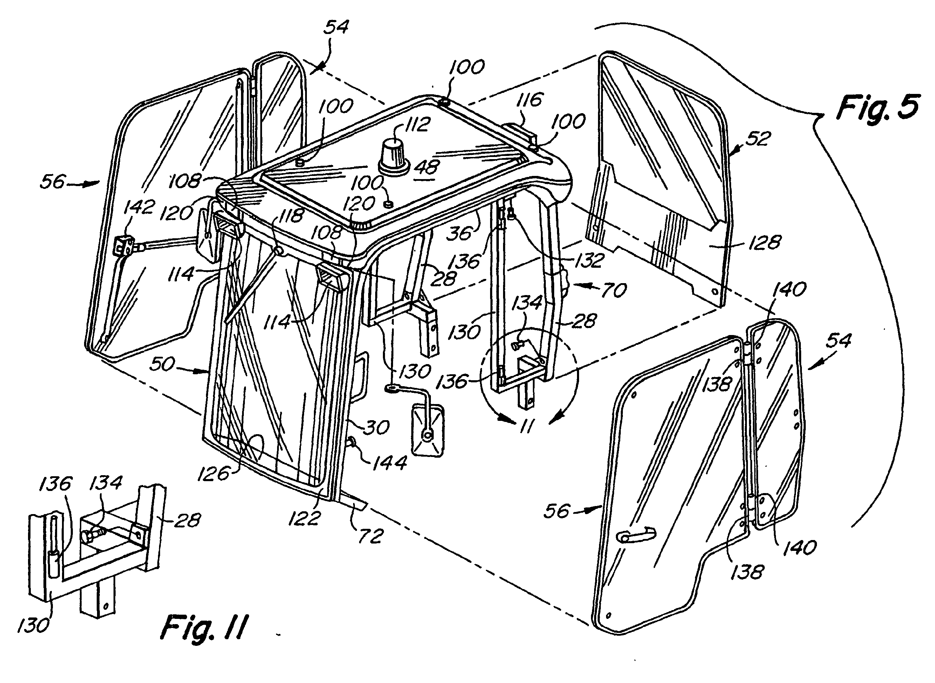

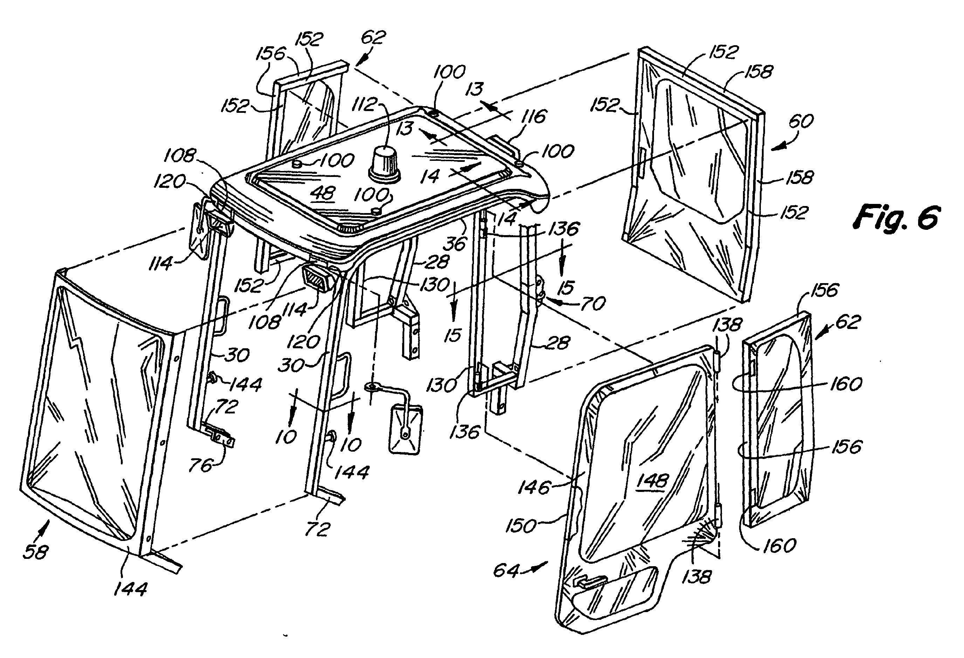

Der Rahmen 26 der modularen Kabine oder Schutzeinrichtung, die in den Figuren 1 und 3 bis 5 gezeigt wird, weist erste und zweite Paare von seitlich beabstandeten und sich im allgemeinen vertikal erstreckenden, rückwärtigen und vorderen Stützstreben 28 und 30, erste und zweite sich seitlich erstreckende, rückwärtige und vordere Zwischen- bzw. Querstreben 32 und 34, die die jeweiligen ersten und zweiten Paare von Stützstreben 28 und 30 verbinden, und ein Paar von seitlich beabstandeten und sich in Längsrichtung erstreckenden Zwischenstreben in Form von Dachstützen bzw. Verbindungsstreben 36, die die rückwärtigen und vorderen Stützstreben 28 und 30 verbinden. Diese Stützstreben 28 und 30, Querstreben 32 und 34 und Verbindungsstreben 36 bilden den Rahmen 26 der modularen Kabine bzw. Schutzeinrichtung, die eine Frontseite 38, eine Rückseite 40, eine linke Seite 42 und eine rechte Seite 44 sowie Flächen oder Oberseiten 46, siehe Figur 4, aufweist. An diese Flächen oder Seiten 38, 40, 42, 44, 46 kann eine Mehrzahl modularer Bauelemente, wie ein Dachelement 48, ein Windabweiser bzw. eine Windschutzscheibe 50, ein rückwärtiges Fenster 52, seitliche Fenster 54 und/oder Türen 56, wie sie beispielsweise in Figur 5 gezeigt werden, selektiv angebracht werden. Die Windschutzscheibe 50, das rückwärtige Fenster 52, die seitlichen Fenster 54 und die Türen 56 können entweder aus Glas oder aus einem flexiblen Material bestehen. Figur 5 illustriert die Schutzeinrichtung mit einem gläsernen Frontfenster bzw. einer Windschutzscheibe 50, gläsernen rückwärtigen Fenstern und seitlichen Fenstern 52 und 54 und gläsernen Türelementen oder Türen 56. Figur 6 zeigt die Schutzeinrichtung mit einer flexiblen Frontscheibe oder Windschutzscheibe 58, flexiblen rückwärtigen Fenstern 60 und seitlichen Fenstern 62 und flexiblen Türelementen oder Türen 64.

Wie es in den Figuren 1 und 3 dargestellt wird, sind die rückwärtigen oder ersten Stützstreben 28 entfernbar in röhrenförmigen Buchsen 66, die an dem Rahmen 14 befestigt sind, anbringbar. Die unteren Bereiche der rückwärtigen Stützstreben 28 werden in den röhrenförmigen Buchsen 66 verschieblich aufgenommen und Schrauben oder ähnliche Befestigungsmittel 68 dienen dazu, diese zusammenzuhalten. Die rückwärtigen Stützstreben 28 und ersten Querstreben 32 können kombiniert auch als Überrollschutz dienen. Ein Scharnier oder Gelenk 70 kann an jeder rückwärtigen Stützstrebe 28 vorgesehen sein, um ein Zusammenfalten nach rückwärts zu erlauben. Dieses Gelenk 70, erlaubt es dem Fahrzeug 10, 12, wenn es nur mit den rückwärtigen Stützstreben 28 und der ersten Querstrebe 32 ausgestattet ist, ein niedrigeres Profil anzunehmen und unterhalb von Baumzweigen oder ähnlichen niedrig hängenden Hindernissen zu arbeiten.

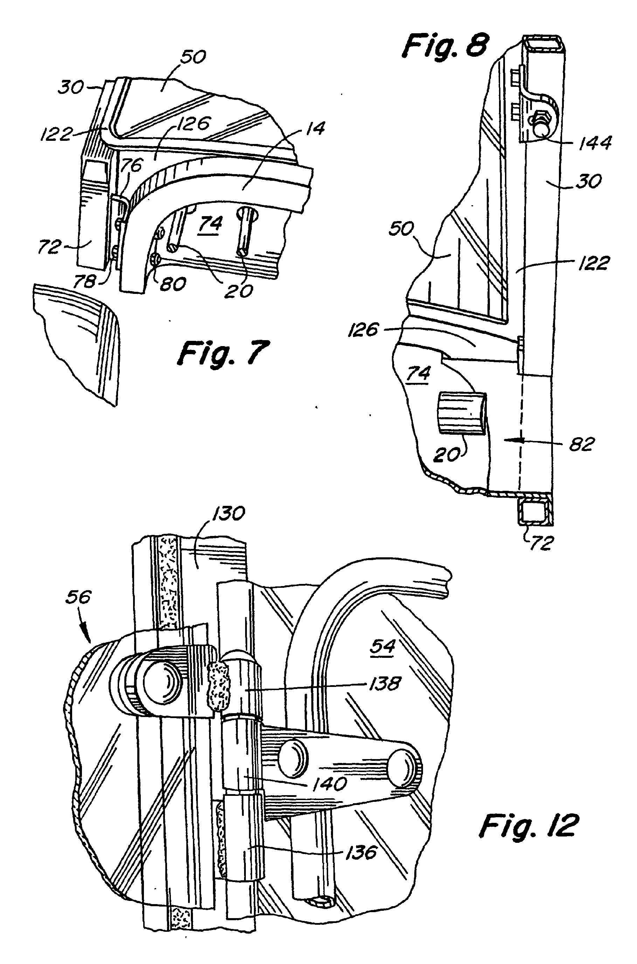

Das vordere oder zweite Paar von Stützstreben 30 ist mit sich nach unten und rückwärts erstreckenden Bereichen 72 versehen, die an dem Rahmen 14 unterhalb der Ebenen der Bodenplatte 74, wie es in den Figuren 1 und 7 gesehen werden kann, angreifen. L-förmige Halter 76 sind an jeden sich rückwärts erstreckenden Bereich 72 einer Vertikalstütze 30 angeschweißt und eine Schraube 78 und Muttern 80 dienen dazu, die Halter 76 mit dem Rahmen 14 zu sichern, der unterhalb der Ebene der Bodenplatte 74 gehalten wird. Da die Bodenplatte 74 des gezeigten Frontmähers oder Fahrzeugs 10 von einer geringeren Breite ist als die Schutzeinrichtung, sind Bodenplattenverbreiterungen 82 zwischen der Bodenplatte 74 und jeder vorderen Vertikalstütze 30, wie es in Figur 8 gesehen werden kann, hinzugefügt. In der bevorzugten Ausführungsform, wird jede der vorderen Stützstreben 30 und die mit ihm verbundenen Verbindungsstreben 36 durch ein einziges röhrenförmiges Element, wie es in Figur 2 gezeigt wird, gebildet. Es soll klargestellt werden, das diese vorderen Stützstreben und Verbindungsstreben 30 und 36 aus separaten Elementen hergestellt werden und dann verbunden werden können.

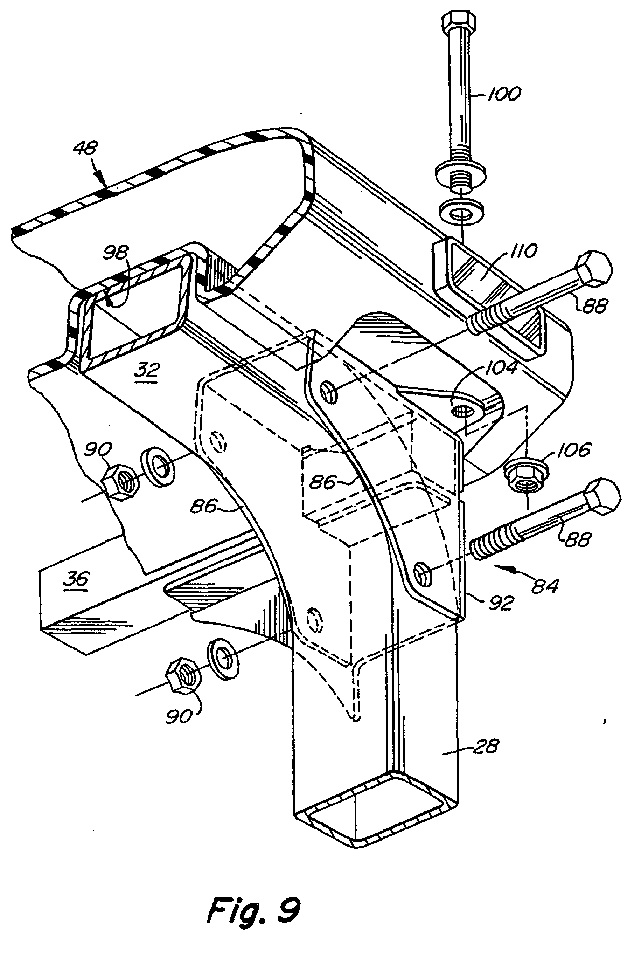

Es sollen nun die Figuren 1, 3 und 9 betrachtet werden, in denen die Verbindung zwischen den Verbindungsstreben 36 und den Ecken des rückwärtigen Überrollschutzes verdeutlicht werden. Wie es am besten in Figur 9 dargestellt wird, ist ein C-förmiger Halter 84 beispielsweise durch Schweißen mit dem rückwärtigen Bereich jeder Verbindungsstrebe 36 verbunden. Die in Längsrichtung beabstandeten vertikalen Seiten 86 jedes C-förmigen Halters 84 sind über Schrauben 88 und Muttern 90 mit der ersten Querstrebe 32 und einer ersten Stützstrebe 28 verbunden. Eine sich vertikal erstreckende Platte 92 ist ebenso mit jeder Verbindungsstrebe 36 verbunden, um an der äußeren vertikalen Wand der ersten Stützstrebe 28 anzuliegen und die Verbindung zwischen der Stützstrebe 28 und der Querstrebe 36 zu verstärken.

Zurückkehrend zu Figur 3 kann gesehen werden, daß die zweite Querstrebe 34, welche dazu dient, die zweiten oder vorderen Stützstreben 30 zu versteifen, mit Haltern 94 verschraubt ist, die von den vorderen Endbereichen jeder Verbindungsstrebe 36 getragen werden. Die strukturelle Kombination der ersten und der zweiten Querstrebe 32 und den Verbindungsstreben 36 stellt die Außen- oder Oberseite 46 des modularen Rahmens 26 zur Verfügung, auf den das Dachelement 48 selektiv aufgesetzt werden kann.

Das Dach oder Dachelement 48 ist in der bevorzugten Ausführungsform aus einem synthetischen Material hergestellt und wird durch ein Rotationssinter- oder Tiefziehverfahren hergestellt, um die gewünschte Form zu erlangen. Ein Glasfaserformverfahren kann ebenfalls benutzt werden. Entlang jeder sich in Längsrichtung erstreckenden Unterseite des Dachelements 48 wie auch entlang der vorderen und rückwärtigen Kanten der Unterseite sind Kanäle 96 und 98 angeformt (siehe Figur 3), welche daran angepaßt sind, jeweils die ersten und zweiten Querstreben 32 und 34 und zwei Verbindungsstreben 36 aufzunehmen. Schrauben 100 sind in die Öffnungen, die in das Dachelement 48 eingeformt sind, eingesetzt und ragen durch diese nach unten, um in vorderen Vorsprüngen 102, die von den vorderen Haltern 94 getragen werden, und in rückwärtigen Vorsprüngen 104, die durch die C-förmigen Halter 84 getragen werden, aufgenommen zu werden. Muttern oder ähnliche Befestigungsmittel 106 greifen an den Schrauben 100 an und sichern das Dachelement 48 an der Oberseite 46 des Rahmens 26. Optional können an dem Dachelement 48 vordere oder rückwärtige Richtungswechselanzeiger 108 und 110, eine Dachwarnleuchte 112, Haltevorrichtungen für vordere und rückwärtige Leuchten 114 und 116, ein Scheibenwischermodul 118 und eine Rückspiegelhalterung 120 eingeformt sein. Darüber hinaus können an der Unterseite des Dachelements 48 Luftleit- und/oder Luftfiltereinrichtungen vorgesehen sein.

Sich nun den Figuren 1 und 5 zuwendend, wird eine gläserne Windschutzscheibe 50 in einer Explosionsdarstellung und einer installierten Ansicht gezeigt. Die gläserne Windschutzscheibe 50 ist vorzugsweise in einem metallenen Rahmen 122 angebracht, der schnell und einfach mit den zweiten Stützstreben 30 über Schrauben und/oder ähnliche Befestigungsmittel 124 gesichert werden kann (siehe Figuren 1, 5 und 10). An dem unteren Ende der Windschutzscheibe 50 ist eine Klappe 126 vorgesehen, die als eine Dichtung zwischen dem Fenster bzw. der Windschutzscheibe 50 und der Bodenplatte 74 des Fahrzeugs 10, 12 dient. Die untere Kante der Klappe 126 kann mit dem unteren Bereich 72 der vorderen Stützstrebe 30 verbunden werden.

Wie es in Figur 5 gezeigt wird, kann das gläserne und metallene rückwärtige Fenster 60 mit Schrauben oder ähnlichen Befestigungsmitteln mit der rückwärtigen oder ersten Stützstrebe 28 verbunden werden. In der bevorzugten Ausführungsform ist eine solide untere Platte 128 unterhalb des rückwärtigen Fensters 52 und direkt hinter dem Bedienersitz 18 vorgesehen.

Um seitliche Türelemente und/oder Fensterelemente anzubringen, sind dritte Stützstreben 130 an dem Fahrzeug auf halber Strecke zwischen jedem Paar von ersten und zweiten Stützstreben 28 und 30 vorgesehen (siehe Figur 5 und 6). Die dritten Stützstreben 130 sind allgemein L-förmig und greifen mit ihren oberen Enden über Schrauben oder ähnliche Befestigungsmittel 132 an einer Verbindungsstrebe 36 an. Ähnlich sind die unteren und rückwärtigen Endbereiche der zentralen Stützstreben 130 über Schrauben oder ähnliche Befestigungsmittel 134 mit den vorderen, vertikalen Oberflächen der rückwärtigen Stützstreben 28 verbunden (siehe Figur 5 und 11). Jede zentrale Stützstrebe 130 trägt ebenfalls einen Haltezapfen 136, auf den die Türen und/oder die seitlichen Fenster schwenkbar aufgesetzt werden können. Mit den zentralen Stützstreben 130 an ihrem Platz können die Türen und Fenster leicht und schnell angebracht werden.

Wiederum Figur 5 betrachtend, welche die gläsernen Türen 56 verdeutlicht, kann gesehen werden, daß ein Paar vertikal beabstandeter Haltebuchsen 138 an ihren rückwärtigen vertikalen Kanten vorgesehen sind. Wie es am besten in der vergrößerten Ansicht aus Figur 12 gesehen werden kann, sind die Haltebuchsen 138 verschieblich auf den Haltezapfen 136 angeordnet, um die Türen 56 schwenkbar aufzusetzen.

Ähnliche auf Zapfen aufsetzbare Buchsen 140 sind an den gläsernen, seitlichen Fenstern 54 vorgesehen (siehe Figur 5). Wiederum Figur 12 betrachtend, wird deutlich, daß die Buchsen 140 der seitlichen Fenster 54 ebenso schwenkbar durch die Haltezapfen 136 gerade unterhalb der Türbuchsen 138 aufgenommen werden. Vorzugsweise werden die seitlichen Fenster 54 auf den Haltezapfen 136 zuerst aufgesetzt und anschließend die Türen 56 angebracht. Diese Haltestruktur erlaubt es entweder Türen und/oder seitliche Fenster einfach anzubringen und/oder zu entfernen. Wiederum die Figuren 5 und 8 betrachtend, wird eine Türklinkenstruktur gezeigt, die an den gläsernen Türelementen bzw. Türen 56 benutzt wird. Jede Tür 56 ist mit einer einfachen und üblichen Klinke 142, die an einem Bolzen 144 an der vorderen Vertikalstütze 30 angebracht ist, ausgestattet.

Es wird sich nun Figur 6 zugewandt, in der eine flexible Windschutzscheibe 58, Türen 64 und seitliche und rückwärtige Fensterelemente bzw. Fenster 62 und 60 gezeigt werden. Die flexible Windschutzscheibe 58 wird in einem Rahmen 144 aufgenommen, der erlaubt, daß sie mit den vorderen Stützstreben 30 über Schrauben oder ähnliche Befestigungsmittel wie die gläserne Windschutzscheibe 50 verbunden wird. Jede(s) flexible Türelement bzw. Tür 64 weist eine Bespannung 146 auf, in der das flexible Fenster 148 vorgesehen ist. Um ihre Gestalt beizubehalten, ist jede Tür 64 mit einer metallenen Stange 150 um ihren Umfang ausgestattet, an welcher die Bespannung 146 angebracht ist. Jede Tür 64 ist ebenso mit Türbuchsen 138 versehen, die denen, die an den gläsernen Türen 56 vorgesehen sind, ähneln. Diese Türbuchsen 138 erlauben es den Türen 64, auf den Haltezapfen 136 schwenkbar und entfernbar angeordnet zu sein. Jede flexible Tür 64 kann mit einer üblichen, einfachen selbstschließenden Klinke ausgestattet sein, die an einer Anschlagplatte, die an der vorderen Vertikalstütze 30 angebracht ist, angreift.

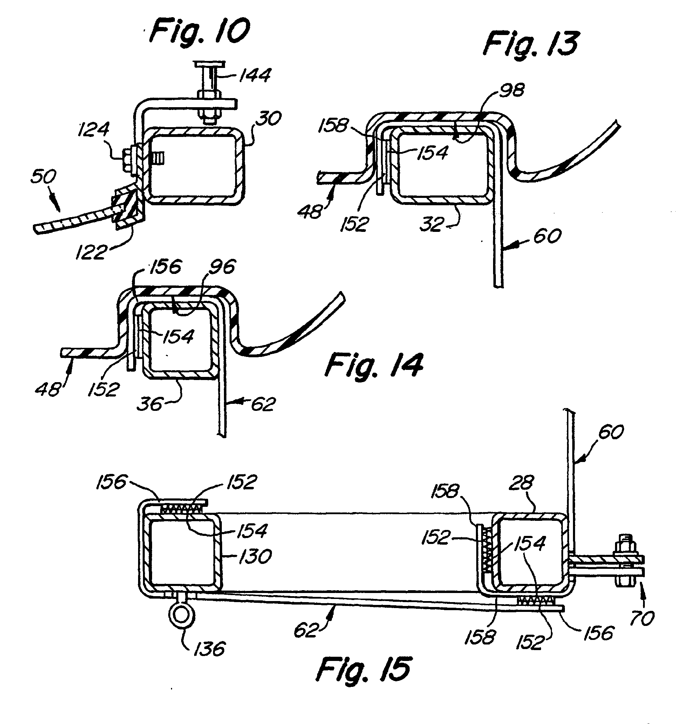

Wie es im Detail in den Figuren 12 bis 15 gezeigt wird, werden Velcro-, welches ein eingetragenes Warenzeichen der Velcro Industries, Amsterdam, Holland, ist, oder ähnliche synthetische Streifen bzw. Haft- oder Klettbänder mit Haken und Schlaufen aufweisenden Oberflächen im folgenden Hakenstreifen 152 und Schlaufenstreifen 154 genannt, benutzt, um es den flexiblen seitlichen und rückwärtigen Fenstern 62 und 60 zu erlauben, leicht und schnell angebracht und entfernt zu werden. Synthetische Befestigungsstreifen, vorzugsweise die Hakenstreifen 152, sind an der Bespannung der Fenster 60 und 62 angebracht. Die Hakenstreifen 152 sind an den seitlichen, oberen und unteren Klappen 156 der seitlichen Fenster 62 angebracht (siehe Figuren 6, 14 und 15). In ähnlicher Weise sind Hakenstreifen 152 an den seitlichen und oberen Klappen 158 des rückwärtigen Fensters 60 (siehe Figur 6) angebracht. Die Schlaufenstreifen 154 sind beispielsweise durch einen Klebstoff an den Oberflächen der zentralen und der rückwärtigen Vertikalstütze 130 und 28, den rückwärtigen Querstreben 32 und den rückwärtigen Bereichen der sich in Längsrichtung erstreckenden Verbindungsstreben 36 befestigt. Schlaufenstreifen sind ebenso an den unteren Oberflächen der sich vertikal erstreckenden Seiten der rückwärtigen Klappen 157 befestigt (siehe Figur 15).

Um entweder die rückwärtigen und/oder seitlichen Fenster 60, 62 anzubringen, sollte das Dachelement 48 von dem Rahmen 26 abgenommen werden. Wenn ein flexibles, rückwärtiges Fenster 60 angebracht werden soll, sollte es vor der Installation der seitlichen Fenster 62 angebracht werden. Das Anbringen der rückwärtigen Fenster 60 erfordert, daß die oberen Klappen 158 mit den Hakenstreifen 152 zuerst um die erste Querstrebe 32 gewunden wird, die seitlichen Klappen 158 werden dann um die erste Vertikalstütze 28 gewunden und dann an den Schlaufenstreifen 154 befestigt. Sollen keine seitlichen Fenster 62 installiert werden, würde das Dachelement 48 an der oberen Seitenfläche 46 des Rahmens 26 befestigt. Wenn das Dachelement 48 an seinem Platz befestigt ist, würde der sich seitlich erstreckende rückwärtige Kanal 98 auf der ersten Querstrebe 32 aufsitzen und helfen die Hakenstreifen 152 auf dem rückwärtigen Fenster 60 mit den Schlaufenstreifen 154 an der Querstrebe 43 zu sichern (siehe Figur 13).

Wenn ebenfalls seitliche Fenster 62 angebracht werden sollen, werden deren Seitenklappen 156 mit den Hakenstreifen 152 um die inneren vertikalen Oberflächen der zentralen Stützstreben 130 gewunden, so daß die Hakenstreifen 152 an den Schlaufenstreifen 154 angreifen, welche an den zentralen Stützstreben 130 befestigt sind (siehe Figur 15). Die oberen Klappen 156 der seitlichen Fenster 62 würden in ähnlicher Weise um die Verbindungsstreben 36 gewunden sein, so daß die Hakenstreifen 152, welche an den oberen Klappen 156 der seitlichen Fenster 62 angebracht sind, in die Schlaufenstreifen 154, die mit dem verbindungsstreben 36 verbunden sind, eingreifen (siehe Figur 14).

Die rückwärtige, vertikale Kante des seitlichen Fensters 62 mit den Hakenstreifen 152 würde dann in die Schlaufenstreifen 154 eingreifen, die an der äußeren, vertikalen Oberfläche des rückwärtigen Fensters 60 angebracht ist. Sollte kein rückwärtiges Fenster 60 verwendet werden, dann würden die Schlaufenstreifen 154 an den rückwärtigen Stützstreben 28 befestigt werden. Nachdem die seitlichen Fenster 62 angebracht sind, würde das Dachelement 48 installiert und, wie es in Figur 14 dargestellt ist, der sich in Längsrichtung erstreckende Kanal 96 des Dachelements 48 würde auf der oberen Klappe 156, des seitlichen Fensters 62 aufsitzen. Öffnungen 160 sind ebenso in den seitlichen Fenstern 62 vorgesehen, um es den Haltezapfen 136 zu erlauben, bezogen auf die seitlichen Fenster 62 nach außen zu ragen. Entsprechend würden die flexiblen, seitlichen Fenster 62 vor den Türen 62 angebracht.

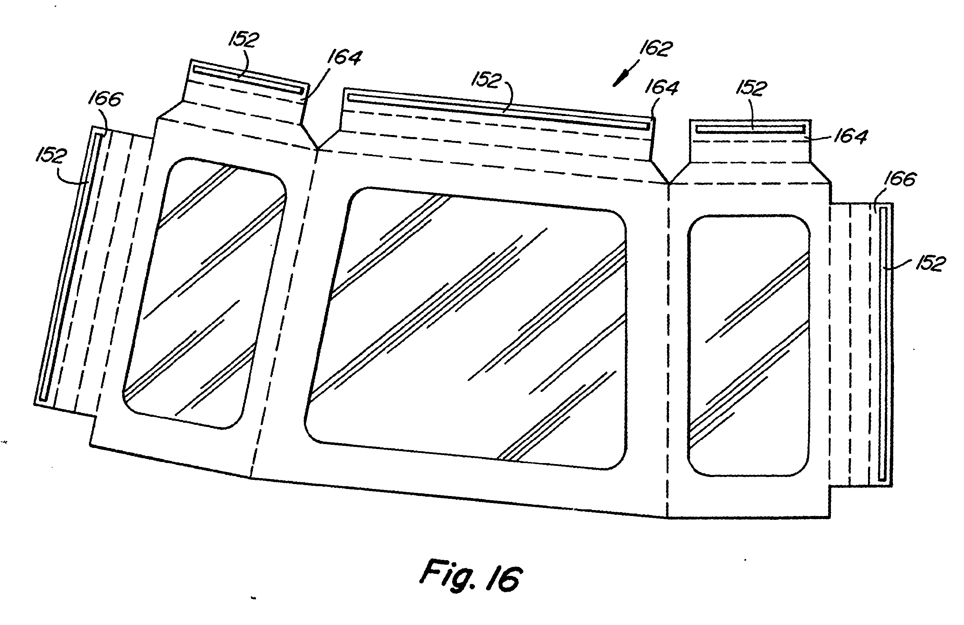

Eine alternative, flexible, einteilige Kombination von seitlichen und rückwärtigen Fenstern 162 wird in Figur 16 gezeigt. Dieses bespannte und flexible Fenster 162 würde Hakenstreifen 152 entlang seiner oberen und seitlichen Klappen 164 und 166 aufweisen, welche jeweils um die erste Querstrebe 32, die Verbindungsstreben 36 und zentralen Stützstreben 130 gewunden würde, um an den Schlaufenstreifen 154, die an diesen Bauteilen in einer im wesentlichen in den Figuren 13, 14 und 15 gezeigten Art angebracht sind, eingreifen.

In Figur 2 wird ein Nutzfahrzeug bzw. Fahrzeug 12 gezeigt, auf welchem die modulare Kabine bzw. Schutzeinrichtung angebracht ist. Es benutzt auch die rückwärtigen, vorderen und zentralen Stützstreben, welche nicht gezeigt sind, um einen Rahmen zur Verfügung zu stellen, an welchen ein Dachelement 168, eine gläserne Windschutzscheibe 170, gläserne, seitliche Fenster 172 und gläserne Türen 174 angebracht wurden. Das Dachelement 168 wurde optional mit Richtungsanzeigerleuchten 176 und Scheibenwischern 178 ausgestattet. Obwohl es nicht dargestellt ist, ist auch ein rückwärtiges Fenster angebracht.

Die modulare Ausführung der vorliegenden Kabine bzw. Schutzeinrichtung erlaubt es einem Fahrzeug 10, 12, mit einer großen Vielzahl von Hüllkonfigurationen ausgestattet zu sein. Es kann nur den rückwärtigen Überschlagschutz oder eine Kombination von rückwärtigen und vorderen Stützstreben 28, 128, 130, Querstreben 32 und Verbindungsstreben 36 aufweisen, um einen vorderen und rückwärtigen Überschlagschutzaufbau zur Verfügung zu stellen. An dem Rahmen bzw. der Schutzeinrichtung können selektiv das Dachelement 48, eine Windschutzscheibe 50, 58, 170, rückwärtige Fenster 52, 60, 162, seitliche Fenster 54, 56, 62, 148, 162, 172 und/oder Türen 56, 64 hinzugefügt werden. Wie es Kosten, Wetter oder Einsatzbedingungen vorgeben und/oder erfordern, können flexible oder gläserne Fenster 50, 52, 54, 56, 58, 60, 62, 148, 162, 170, 172 und/oder Türen 56, 64, 174 gewählt werden.

Die Kompatibilität der modularen Bauteile erlaubt es, daß verschiedene Elemente von Anfang an oder später ausgewählt werden. Die modulare Konstruktion erlaubt den Elementen kompakt in Form eines Bündels, anstelle einer kompletten Kabine bzw. Schutzeinrichtung versendet zu werden. Die Auswahl der Kabinen- oder Schutzeinrichtungskonfiguration erlaubt dem Händler oder Benutzer die Möglichkeit, die Schutzeinrichtung ihren speziellen Bedürfnissen und/oder Verwendungszwecken anzupassen.

## Patentansprüche

1. Schutzeinrichtung mit zumindest zwei zumindest annähernd vertikal ausgerichteten, voneinander seitlich beabstandeten ersten Stützstreben (28, 30, 130), die einen Überschlagschutz bilden, wobei an jeder ersten Stützstrebe ein Scharnier oder Gelenk (70) vorgesehen ist, um ein Zusammenfalten des Überschlagschutzes nach rückwärts zu erlauben, wobei die ersten Stützstreben (28, 30, 130) mit weiteren im wesentlichen vertikal ausgerichteten Stützstreben (28, 30, 130) und/oder im wesentlichen horizontal ausgerichteten Zwischenstreben (32, 34, 36) zur Bildung eines Rahmens (26) in Abhängigkeit von spezifischen Einsatzbedingungen verbindbar sind.

2. Schutzeinrichtung nach einem oder mehreren der vorherigen Ansprüche, **dadurch gekennzeichnet, daß** zumindest eine der Stützstreben (28, 30, 130), vorzugsweise eine bezogen auf die Vorwärtsfahrtrichtung des Arbeitsgeräts (10, 12) vordere Stützstrebe (30, 130) mit einer der Zwischenstreben (36) einen Bügel bildet.

3. Schutzeinrichtung nach einem oder mehreren der vorherigen Ansprüche, **dadurch gekennzeichnet, daß** an dem Rahmen (26) Bauelemente, beispielsweise in der Art von Abdeckelementen wie Türen (56, 64), Fenstern (50, 52, 54, 56, 58, 60, 62, 148, 162, 170, 172) oder Dachelementen (48), wahlweise und/oder lösbar anbringbar sind.

4. Schutzeinrichtung nach Anspruch 3, **dadurch gekennzeichnet, daß** die Bauelemente zumindest bereichsweise starr und/oder flexibel ausgebildet sind.

5. Bedienerstand mit einer Schutzeinrichtung nach einem oder mehreren der vorherigen Ansprüche, insbesondere zur Verwendung an einem Fahrzeug zur Rasen-, Garten- bzw. Grundstückspflege, einem Baufahrzeug oder einem landwirtschaftlichen oder industriellen Arbeitsfahrzeug.

## Claims

1. A protective arrangement with at least two first support struts (28, 30, 130) which are aligned at least approximately vertically, are spaced from one another and form a rollover protection means, wherein a hinge or joint (70) is provided in each of the first support struts, in order to allow folding up to the rear of the rollover protection means, wherein the first support struts (28, 30, 130) can be connected to further substantially vertically aligned support struts (28, 30, 130) and/or substantially horizontally aligned intermediate struts (32, 34, 36) to form a frame (26) in dependence on specific conditions of use.

2. A protective arrangement according to claim 1, **characterized in that** at least one of the support struts (28, 30, 130), preferably a front support strut (30, 130) relative to the forward travel direction of the working implement (10, 12), forms a yoke with one of the intermediate struts (36).

3. A protective arrangement according to one or more of the preceding claims, **characterized in that** components, for example in the nature of cladding elements such as doors (56, 64), windows (50, 52, 54, 56, 58, 60, 62, 148, 162, 170, 172) or roof elements (48) can be attached selectively and/or removably to the frame (26).

4. A protective arrangement according to claim 3, **characterized in that** the components are formed at least locally rigidly and/or flexibly.

5. An operator's platform with a protective device according to one or more of the preceding claims, especially for use on a vehicle for care of lawns, gardens or plots, a construction vehicle or an agricultural or industrial working vehicle.

## Revendications

1. Dispositif de protection comportant au moins deux premières entretoises (28, 30, 130), qui sont orientées au moins sensiblement verticalement et écartées latéralement les unes des autres et qui forment une protection en cas de retournement, une charnière ou articulation (70) étant prévue sur chaque première entretoise pour permettre un pliage du dispositif de protection vers l'arrière, les premières entretoises (28, 30, 130) étant propres à être reliées, en fonction de conditions d'utilisation spécifiques, à d'autres entretoises de support (28, 30, 130), orientées sensiblement verticalement, et/ou à des entretoises intermédiaires (32, 34, 36), orientées sensiblement horizontalement, pour former un châssis (26).

2. Dispositif de protection selon une ou plusieurs des revendications précédentes, **caractérisé en ce qu'**au moins une des entretoises de support (28, 30, 130), de préférence une entretoise de support avant (30, 130) par rapport à la direction d'avancement du véhicule de travail (10, 12), forme un arceau conjointement avec l'une des entretoises intermédiaires (36).

3. Dispositif de protection selon une ou plusieurs des revendications précédentes, **caractérisé en ce que** des éléments de construction, par exemple sous forme d'éléments de fermeture, tels que des portes (56, 64), des fenêtres (50, 52, 54, 56, 58, 60, 62, 148, 162, 170, 172) ou des éléments formant toit (48), peuvent être montés au choix et/ou de manière amovible sur le châssis (26).

4. Dispositif de protection selon la revendication 3, **caractérisé en ce que** les éléments de construction, au moins par zones, sont rigides et/ou flexibles.

5. Poste de commande comportant un dispositif de protection selon une ou plusieurs des revendications précédentes, destiné en particulier à être utilisé sur un véhicule pour l'entretien des pelouses, jardins ou terrains, un engin de chantier ou un véhicule de travail agricole ou industriel.
